# EUROPEAN PATENT APPLICATION

(11) **EP 4 653 771 A1**
(43) Date of publication of application: **26.11.2025**
(21) Application number: 24176901.7
(22) Date of filing: 20.05.2024
(51) Int. Cl.: F24D 17/00, A47J 31/00, F24D 17/02

(54) **WATER-DISPENSING SYSTEM FOR GENERATING BOILED WATER OF DIFFERENT TEMPERATURES**

(71) Applicant: Li, Lian-Hong, Chongqing (CN)
(72) Inventor: LI, Lian-Hong, Chongqing (CN); MA, Xue, Chongqing (CN); YANG, Xing-Fu, Chongqing (CN)
(74) Representative: Cabinet Chaillot

(57) **Abstract**

A water-dispensing system (3) includes an inlet channel (311) for supplying unboiled water, a boiling area (32), a heat-exchange area (33), and a chilling area (34). The boiling area (32) has a heater (321) disposed on the inlet channel (311) for boiling the unboiled water and connected to a hot-water channel (322). The hot-water channel (322) is connected to a feeding channel (325). The heat-exchange area (33) has a heat-exchange container (331) where a heat-exchange pipe (332) is sinuously arranged and then connected to the feeding channel (325) and a warm-water channel (334) . A cooling unit (333) is outside the heat-exchange pipe (332) . The chilling area (34) has a refrigerant container (341) where a chilling pipe (342) is sinuously arranged and a chilling unit (344) adapted to cool boiled water and the cooling material (3331). The chilling pipe (342) is connected to the warm-water channel (334) and a cold-water channel (343) . Accordingly, the system supplies boiled water having different temperatures and preheats the unboiled water to save boiling time and reduce energy consumption.

## Description

### BACKGROUND OF THE INVENTION

### 1. Field of the Invention

This invention relates to a water-dispensing device and relates particularly to a water-dispensing system for generating boiled water of different temperatures.

### 2. Description of the Related Art

An adequate intake of daily water is one of the main factors to maintain good health. Although tap water will be processed simply before being exported to taps of users, the tap water may be contaminated easily during the delivery in water distribution pipelines . Thus, it is not recommended to drink the tap water directly. In other words, the tap water should be boiled before drinking, thereby killing or inactivating germs. A water-dispensing device is usually adapted to supply boiled water because it is much more convenient than boiling the tap water on a fire. Hence, the water-dispensing device becomes one of the essential appliances in many households.

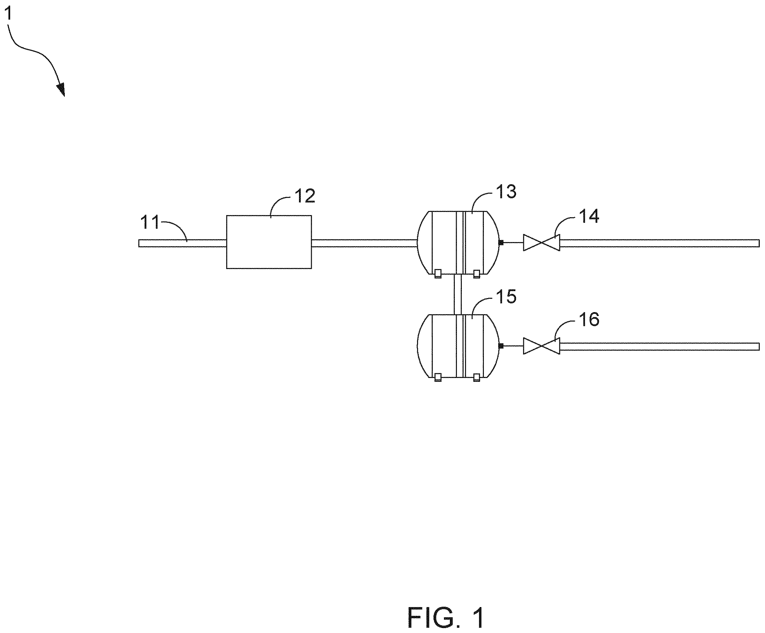

Referring to Fig. **1****,** a conventional water-dispensing device **1** comprises an inlet channel **11** connected to a water source (not shown) for introducing unboiled water from the water source, a heater **12** installed on the inlet channel **11,** a hot-water container **13** connected to the heater **12,** a first control valve **14** connected to the hot-water container **13,** a warm-water container **15** connected to the hot-water container **13,** and a second control valve **16** connected to the warm-water container **15.** During a water-dispensing operation of the water-dispensing device **1,** the unboiled water, namely the tap water, is imported into the inlet channel **11** from the water source and subjected to a boiling treatment conducted by the heater **12** whereby the unboiled water is turned into the hot boiled water. The hot boiled water is then exported and stored in the hot-water container **13.** Some of the hot boiled water is introduced into the warm-water container **15** through the hot-water container **13** whereby the hot boiled water in the warm-water container **15** is cooled down gradually and tuned into warm boiled water. The first control valve **14** and the second control valve **16** are adapted to control the export of the hot boiled water and the warm boiled water, thereby meeting different drinking requirements.

The hot boiled water generated by the water-dispensing device **1** is usually stored in the hot-water container **13** after the unboiled water is turned into the hot boiled water caused by the boiling treatment so that the hot boiled water is exported quickly when it is needed. However, the hot boiled water in the hot-water container **13** is cooled down over time easily, and thus the temperature of the hot boiled water cannot be maintained at a high temperature of around 100°C at any time. When the hot boiled water having the high temperature is needed, the hot boiled water in the hot-water container **13** should be subjected to the boiling treatment again. The re-boiling treatment consumes a lot of energy and time. In addition, the water-dispensing device **1** can only supply the hot boiled water and the warm boiled water. The water-dispensing device **1** also cannot control the temperature of the boiled water supplied accurately, and that is inconvenient for use. Further, the hot-water container **13** and the warm-water container **15** of the water-dispensing device **1** occupy a lot of space, and therefore the installation and the arrangement of the water-dispensing device **1** is restricted to the space, and that requires to be improved.

### SUMMARY OF THE INVENTION

The object of this invention is to provide a water-dispensing system for generating boiled water of different temperatures capable of preheating unboiled water to shorten boiling time and reduce energy consumption, supplying boiled water having different temperatures quickly, and greatly improving the convenience of use.

The water-dispensing system for generating boiled water of different temperatures of this invention comprises an inflow area, a boiling area, a heat-exchange area, and a chilling area. The inflow area includes an inlet channel connected to a water source for importing unboiled water from the water source into the inlet channel. The boiling area includes a heater installed on the inlet channel, a hot-water channel connected to the heater and opposite to the inlet channel, a hot-water outlet formed at one end of the hot-water channel for exporting hot boiled water, a first control valve installed on the hot-water channel, and a feeding channel connected to the hot-water channel via the first control valve. The heat-exchange area includes a heat-exchange container in which a heat-exchange pipe is sinuously installed and a cooling unit outside the heat-exchange pipe. The heat-exchange pipe is connected between the feeding channel and a warm-water channel which has a warm-water outlet adapted to export warm boiled water. The cooling unit has a cooling material in the form of fluid filled in the heat-exchange container, and a first and a second delivery pipes extending outwards from the heat-exchange container respectively. The chilling area includes a refrigerant container in which a chilling pipe and a chilling unit are installed. The chilling pipe is connected between the warm-water channel and a cold-water channel which has a cold-water outlet adapted to export cold boiled water. The first and second delivery pipes are connected between the heat-exchange container and the refrigerant container, thereby allowing the heat-exchange container to export the cooling material through the first delivery pipe and to import the cooling material from the second delivery pipe to achieve the circulation of the cooling material between the heat-exchange container and the refrigerant container. A second control valve is installed between the refrigerant container and the warm-water channel for controlling the export of the warm boiled water into the chilling pipe inside the refrigerant container. Thus, the unboiled water is subjected to a boiling treatment executed by the heater whereby the unboiled water is turned into the hot boiled water when a hot-water mode is selected. The hot boiled water is then exported through the hot-water outlet. In a warm-water mode, the hot boiled water is introduced into the heat-exchange pipe through the feeding channel under the control of the first control valve and subjected to a heat-exchanging treatment whereby the hot boiled water is turned into the warm boiled water. The warm boiled water is exported through the warm-water outlet. Meanwhile, the subsequent unboiled water is also subjected to a heat-exchanging treatment while passing through the heat-exchange container whereby the unboiled water is preheated. Thus, the energy consumption and the required time for executing the boiling treatment are saved. Further, in a cold-water mode, the warm boiled water is introduced into the chilling pipe under the control of the second control valve and subjected to a chilling treatment conducted by the chilling unit whereby the warm boiled water is turned into the cold boiled water. The cold boiled water is exported through the cold-water outlet. Thus, the water-dispensing system is capable of supplying boiled water having different temperatures quickly to thereby meet different requirements and increase the convenience of use.

Preferably, at least one sensor is installed on the warm-water channel and adapted to detect a temperature of the warm boiled water in the warm-water channel.

Preferably, the chilling unit includes a compressor and a condensing pipe installed around the chilling pipe. The condensing pipe is filled with a refrigerant material. The refrigerant material is driven by the compressor to flow within the condensing pipe.

Preferably, a returning channel is installed between the refrigerant container and the warm-water channel. The warm boiled water is cooled down by the chilling unit and turned into cool boiled water. The cool boiled water flows into the warm-water channel through the returning channel.

### BRIEF DESCRIPTION OF THE DRAWINGS

- Fig. **1**: is a schematic view showing a conventional water-dispensing device; and
- Fig. **2**: is a schematic view showing a first preferred embodiment of this invention.

### DETAILED DESCRIPTION OF THE PREFERRED EMBODIMENTS

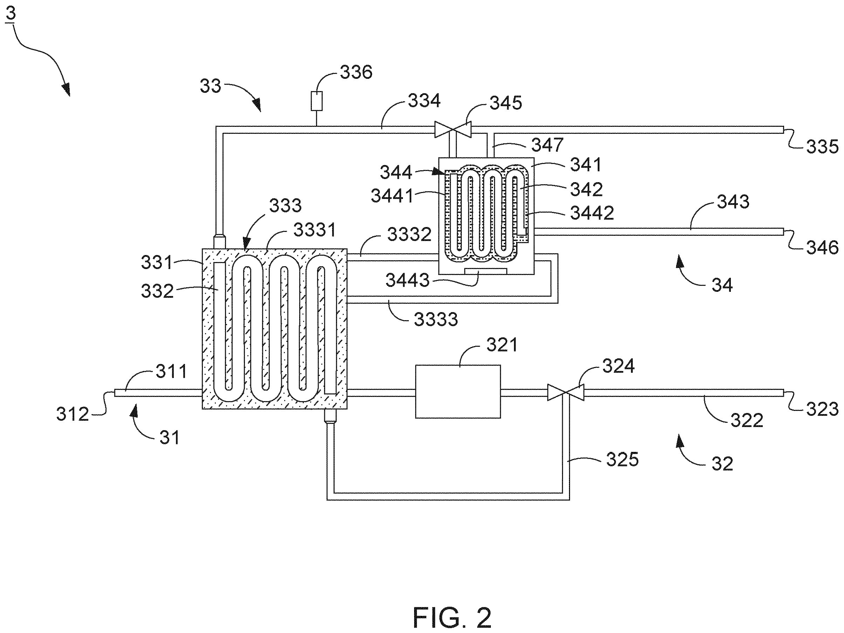

Referring to Fig. **2****,** a first preferred embodiment of a water-dispensing system **3** for generating boiled water of different temperatures of this invention is disclosed. The water-dispensing system **3** includes an inflow area **31,** a boiling area **32** connected to the inflow area **31,** a heat-exchange area **33** connected to the boiling area **32** and the inflow area **31** respectively, and a chilling area **34** connected to the heat-exchange area **33.** The inflow area **31** has an inlet channel **311** and an unboiled water inlet **312** formed at one end of the inlet channel **311.** The inlet channel **311** is connected to a water source (not shown) via the unboiled water inlet **312** for introducing unboiled water from the water source into the inlet channel **311.**

The boiling area **32** has a heater **321** assembled on the inlet channel **311,** a hot-water channel **322** extending outwards from the heater **321,** a hot-water outlet **323** formed at one end of the hot-water channel **322,** a first control valve **324** set on the hot-water channel **322,** and a feeding channel **325** connected to the hot-water channel **322** via the first control valve **324.** The unboiled water of the water source is imported into the inlet channel **311** and subjected to a boiling treatment conducted by the heater **321** whereby the unboiled water is turned into hot boiled water. The hot boiled water is introduced into the hot-water channel **322** and exported through the hot-water outlet **323.** The hot boiled water is also allowed to be introduced into the heat-exchange area **33** through the feeding channel **325** under the control of the first control valve **324.**

The heat-exchange area **33** has a heat-exchange container **331,** a heat-exchange pipe **332** sinuously installed in the heat-exchange container **331** for receiving the hot boiled water, and a cooling unit **333** set outside the heat-exchange pipe **332.** One end of the heat-exchange pipe **332** is connected to the feeding channel **325.** Another end of the heat-exchange pipe **332** is connected to a warm-water channel **334.** A warm-water outlet **335** is formed at one end of the warm-water channel **334.** At least one sensor **336** is installed on the warm-water channel **334.** The cooling unit **333** has a cooling material **3331** in the form of fluid accommodated in the heat-exchange container **331,** a first delivery pipe **3332** and a second delivery pipe **3333** connected to the heat-exchange container **331** respectively whereby the heat-exchange container **331** can export the cooling material 3331 through the first delivery pipe **3332** and import the cooling material **3331** from the second delivery pipe **3333.** The hot boiled water is introduced into the heat-exchange pipe **332** through the feeding channel **325** and then subjected to a heat-exchanging treatment conducted by the cooling material **3331** whereby the hot boiled water is cooled down and turned into warm boiled water. The warm boiled water is exported through the warm-water outlet **335** or is allowed to be introduced into the chilling area **34** through the warm-water channel **334.** Meanwhile, the heat-exchange container **331** is connected to the inlet channel **311,** namely the inlet channel 311 is inserted into the heat-exchange container **331,** so that the unboiled water in the inlet channel **311** is also subjected to the heat-exchanging treatment conducted by the cooling material **3331** whereby the unboiled water is preheated.

The chilling area **34** has a refrigerant container **341,** a chilling pipe **342** sinuously installed in the refrigerant container **341** for receiving the warm boiled water, a cold-water channel **343** extending outwards from the chilling pipe **342,** a chilling unit **344** installed in the refrigerant container **341** for cooling the warm boiled water, a second control valve **345** set at a junction of the refrigerant container **341** and the warm-water channel **334,** and a cold-water outlet **346** formed at one end of the cold-water channel **343.** One end of the chilling pipe **342** is connected to the warm-water channel **334.** Another end of the chilling pipe **342** is connected to the cold-water channel **343.** In this preferred embodiment, the chilling unit **344** has a condensing pipe **3441** with which the chilling pipe **342** is covered, a refrigerant material **3442** filled in the condensing pipe **3441,** and a compressor **3443.** The refrigerant material **3442** is allowed to flow in the condensing pipe **3441** when the compressor **3443** is in operation. A returning channel **347** extends between the refrigerant container **341** and the warm-water channel **334.** The warm boiled water in the warm-water channel **334** is introduced into the chilling pipe **342** under the control of the second control valve **345** and then subjected to a chilling treatment conducted by the chilling unit **344** whereby the warm boiled water is cooled down and turned into cold boiled water. The cold boiled water is exported through the cold-water outlet **346.** Further, the first delivery pipe **3332** and the second delivery pipe **3333** are connected between the heat-exchange container **331** and the refrigerant container **341** whereby the cooling material **3331** is exported by the heat-exchange container **331** into the refrigerant container **341** through the first delivery pipe **3332** and cooled down by the chilling unit **344.** The cooling material **3331** cooled down by the chilling unit **344** is allowed to be imported into the heat-exchange container **331** through the second delivery pipe **3333,** thereby facilitating the circulation of the cooling material **3331** between the refrigerant container **341** and the heat-exchange container **331** so that the temperature of the cooling material **3331** is controlled.

Referring to Fig. **2****,** during a water-dispensing operation of the water-dispensing system **3,** when a hot-water mode is selected, the unboiled water is introduced into the inlet channel **311** from the water source via the unboiled water inlet **312.** The unboiled water is then subjected to a boiling treatment executed by the heater **321** whereby the unboiled water is turned into the hot boiled water. The hot boiled water is exported through the hot-water outlet **323** along the hot-water channel **322,** thereby supplying the hot boiled water having the high-temperature for use.

When a warm-water mode is selected, the hot boiled water is introduced into the heat-exchange pipe **332** through the feeding channel 325 under the control of the first control valve **324.** Owing to the temperature differences between the hot boiled water and the cooling material **3331,** the heat of the hot boiled water is transferred to the cooling material **3331** whereby the hot boiled water is cooled down and turned into the warm boiled water having the temperature around 45°C. The warm boiled water is exported through the warm-water outlet **335** along the warm-water channel **334.** Meanwhile, the sensor **336** is adapted to detect the temperature of the warm boiled water so that the temperature of the warm boiled water conforms with a set temperature and is suitable for use. Because the inlet channel **311** is inserted into the heat-exchange container **331,** the heat of the cooling material **3331** received from the hot boiled water is transferred to the unboiled water of the inlet channel **311** whereby the temperature of the cooling material **3331** is reduced and the temperature of the unboiled water is increased. Thus, the unboiled water in the inlet channel **311** is preheated before being boiled by the heater **321,** thereby shortening the time required for boiling the unboiled water, reducing the energy consumed by the heater **321** for executing the boiling treatment, and accelerating the boiling treatment. In addition, the heat-exchanging circulation among the hot boiled water, the unboiled water, and the cooling material **3331** is capable of preventing energy waste.

When a cold-water mode is selected, the warm boiled water is introduced into the chilling pipe **342** under the control of the second control valve **345.** Owing to the temperature differences between the warm boiled water and the refrigerant material **3442,** the heat of the warm boiled water is transferred to the refrigerant material **3442** whereby the warm boiled water is cooled down and turned into the cold boiled water having the temperature below 45°C. The cold boiled water is exported through the cold-water outlet **346** along the cold-water channel **343,** thereby supplying the cold boiled water having the low-temperature for use. Meanwhile, if the temperature of the warm boiled water detected by the sensor **336** does not meet the set temperature, namely the warm boiled water in the warm-water channel **334** is not cooled down to have a suitable temperature after the heat-exchanging treatment is conducted, the warm boiled water is introduced into the chilling pipe **342** for a shorter period whereby the warm boiled water is cooled down slightly and turned into cool boiled water having the temperature ranging between the temperature of the warm boiled water and the temperature of the cold boiled water. The cool boiled water is introduced into the warm-water channel **334** through the returning channel **347** and exported through the warm-water outlet **335.** Hence, the water-dispensing system **3** is capable of supplying the boiled water having different temperatures quickly for meeting different purposes and satisfying different drinking habits and preferences, thereby improving the convenience of use. In addition, the boiled water having different temperatures is supplied after being subjected to the boiling treatment, thereby killing or inactivating germs, meeting the health and safety requirements, and ensuring the personal health. Further, when the temperature of the cooling material **3331** of the cooling unit **333** is too high, the cooling material **3331** is exported from the heat-exchange container **331** into the refrigerant container **341** through the first delivery pipe **3332** whereby the cooling material **3331** is cooled down by the chilling unit **344.** The cooling material **3331** cooled down by the chilling unit **344** is then imported into the heat-exchange container **331** through the second delivery pipe **3333,** thereby maintaining a stable operation of the cooling unit **333** and extending the service life of the cooling unit **333.**

To sum up, the water-dispensing system for generating boiled water of different temperatures of this invention takes advantages that the unboiled water is subjected to the boiling treatment conducted by the heater whereby the unboiled water is turned into the hot boiled water in the hot-water mode. In the warm-water mode, the hot boiled water is subjected to the heat-exchanging treatment conducted by the cooling unit in the heat-exchange container after being introduced into the heat-exchange pipe whereby the hot boiled water is turned into the warm boiled water. The unboiled water in the inlet channel is also subjected to the heat-exchanging treatment so that the unboiled water is preheated, thereby effectively reducing the energy consumption and time required for boiling the unboiled water and increasing the boiling speed. In the cold-water mode, the warm boiled is subjected to the chilling treatment conducted by the chilling unit whereby the warm boiled water is turned into the cold boiled water after being introduced into the chilling pipe. Thus, the boiled water having different temperatures is provided speedily according to different requirements, thereby improving the convenience of use.

While the embodiments of this invention are shown and described, it is understood that further variations and modifications may be made without departing from the scope of this invention.

## Claims

1. A water-dispensing system (3) for generating boiled water of different temperatures comprising:
an inflow area (31) including an inlet channel (311) connected to a water source for introducing unboiled water from said water source into said inlet channel (311);
a boiling area (32) including a heater (321) disposed on said inlet channel (311), a hot-water channel (322) extending outwards from said heater (321), a hot-water outlet (323) formed at one end of said hot-water channel (322), a first control valve (324) disposed on said hot-water channel (322), and a feeding channel (325) connected to said hot-water channel (322) via said first control valve (324), said unboiled water of said water source being introduced from said inlet channel (311) into said hot-water channel (322) and subjected to a boiling treatment conducted by said heater (321) whereby said unboiled water is turned into hot boiled water, said hot boiled water being exported through said hot-water outlet(323);
a heat-exchange area (33) including a heat-exchange container (331), a heat-exchange pipe (332) sinuously disposed in said heat-exchange container (331) for receiving said hot boiled water, and a cooling unit (333) outside said heat-exchange pipe (332), wherein one end of said heat-exchange pipe (332) is connected to said feeding channel (325), and another end of said heat-exchange pipe (332) is connected to a warm-water channel (334), said cooling unit (333) including a cooling material (3331) in the form of fluid accommodated in said heat-exchange container (331), said cooling material (3331) being adapted to subject said hot boiled water received by said heat-exchange pipe (332) to a heat-exchanging treatment whereby said hot boiled water is turned into warm boiled water, said warm-water channel (334) having a warm-water outlet (335) adapted to export said warm boiled water, said cooling unit (333) further including a first delivery pipe (3332) and a second delivery pipe (3333) extending outwards from said heat-exchange container (331) respectively, thereby allowing said heat-exchange container (331) to export said cooling material (3331) through said first delivery pipe (3332) and import said cooling material (3331) from said second delivery pipe (3333); and
a chilling area (34) including a refrigerant container (341), a chilling pipe (342) sinuously disposed in said refrigerant container (341) and connected to said warm-water channel (334) for receiving said warm boiled water, a cold-water channel (343) extending outwards from said chilling pipe (342), a cold-water outlet (346) formed at one end of said cold-water channel (343), and a chilling unit (344) adapted to cool said warm boiled water within said refrigerant container (341), said refrigerant container (341) being disposed between said first delivery pipe (3332) and said second delivery pipe (3333), said refrigerant container (341) thereby being adapted to receive said cooling material (3331) exported by said first delivery pipe (3332) and cool said cooling material (3331) down with said chilling unit (344), and said heat-exchange container (331) being allowed to import said cooling material (3331) which is cooled down from said second delivery pipe (3333), thereby facilitating the circulation of said cooling material (3331) between said refrigerant container (341) and said heat-exchange container (331), a second control valve (345) being disposed at a junction of said chilling pipe (342) and said warm-water channel (334), said warm boiled water of said warm-water channel (334) being allowed to flow into said chilling pipe (342) inside said refrigerant container (341) under the control of said second control valve (345), and said warm boiled water thereby being cooled down by said chilling unit (344) and turned into cold boiled water, said cold boiled water being exported through said cold-water outlet (346).

2. The water-dispensing system (3) according to claim 1, wherein at least one sensor (336) is disposed on said warm-water channel (334) and adapted to detect a temperature of said warm boiled water in said warm-water channel (334).

3. The water-dispensing system (3) according to claim 1 or 2, wherein said chilling unit (344) includes a compressor (3443) and a condensing pipe (3441) disposed around said chilling pipe (342), said condensing pipe (3441) being filled with a refrigerant material (3442), said refrigerant material (3442) flowing in said condensing pipe (3441) when said compressor (3443) is in operation.

4. The water-dispensing system (3) according to any one of claims 1 to 3, wherein a returning channel (347) is disposed between said refrigerant container (341) and said warm-water channel (334), said warm boiled water being cooled down by said chilling unit (344) and turned into cool boiled water, said cool boiled water flowing into said warm-water channel (334) through said returning channel (347) .
